# EUROPEAN PATENT APPLICATION

(11) **EP 1 286 408 A2**
(43) Date of publication of application: **26.02.2003**
(21) Application number: 02003456.7
(22) Date of filing: 14.02.2002
(51) Int. Cl.: H01M 8/24

(54) **Modular single cell and assembled cell stack of a proton exchange membrane fuel cell**

(30) Priority: 16.08.2001 CN 01124223
(71) Applicant: Asia Pacific Fuel Cell Technologies, Ltd., Neihu, Taipei 114 (TW)
(72) Inventor: Jefferson, Yang YS, Asia Pacific Fuel Cell Tec.Ltd, Neihu, Taipei 114 (TW)
(74) Representative: Goddar, Heinz J., Dr.

(57) **Abstract**

The present invention relates to a novel structure of a single cell module of a proton exchange membrane fuel cell (PEMFC), comprising an anode bipolar plate, a cathode bipolar plate and a membrane electrode assembly (MEA) sandwiched therebetween. The MEA is substantially disposed on a central portion between the anode and cathode bipolar plates. A desired amount of silicon rubber (RTV), by means of programmed automatic robotic arms, is applied to a circumferential portion between the anode and cathode bipolar plates to seal, cushion and position the anode bipolar plate and cathode bipolar plate under a pre-determined compression pressure after the RTV is cured, thereby forming an integral single cell module. According to the structural concept, a plurality of the single cells can be customized to form a cell unit by superimposing them in sequential order, of which an upper surface of the anode bipolar plate and/or a lower surface of the cathode bipolar plate are/is formed with grooves on their circumferential portions for receiving the RTV so as to provide a sealing, cushioning and positioning contact, and achieve an optimal compression pressure among the layered single cells.

## Description

### Background of the Inventions

### Field of the Invention

The present invention relates to a single cell of a proton exchange membrane fuel cell, particularly to a modulized single cell well-prepared in advance to assemble the proton exchange membrane fuel cell, and a cell unit assembled by a plurality of the singe cell under a similar concept.

### Descriptions of the Related Art

Nowadays society demands greater amounts of energy than ever before. Traditional energy supplies fail to meet the industrial needs of the 21st century. Unfortunately, the traditional energy that people have relied on in the past will be used up in the next few decades. Traditional energy which causes severe pollution to the environment will adversely affect the development of life.
Therefore, most countries of the world are looking for new energy sources to replace the exhausted traditional sources of energy. Presently, scientists agree that hydrogen energy is a successful, effective and clean energy that can replace petroleum, diesel oil, and other fossil fuels. The fuel cell is a device, which directly converts the hydrogen and oxygen chemical energy to electric energy through an electrode reaction. Because the fuel cell has no combustion reaction, there is no energy loss, no pollution and no noise. The energy transfer efficiency thereof is up to 60% to 80%, so it is widely employed in the field of technical research and development.

There are approximately five kinds of fuel cells which have been developed. Each kind of fuel cell (FC) has its own advantages, disadvantages and extent of applications. The proton exchange membrane fuel cell (PEMFC) has the unique advantages of long service life, low operational temperature, high effective power density, and an adjustable power output, all of which are frequently employed in the machines. Therefore, the PEMFC will be the most competitive power supply in the field of replacing the existing mechanical power source of vehicles.
The following is the basic operating principle of a fuel cell:
A fuel cell is directed to use hydrogen and oxygen to proceed with electrochemical reactions to produce water and release electrical energy, which can be basically considered a reverse device of water electrolysis. The device is comprised of four conductive elements, namely, an anode, a cathode, an electrolyte and an external circuit. The following is the schematic view showing the basic construction: in which (1) introduce hydrogen to the anode; (2) proceed with the anode reactions of H ₂ 2 H ⁺ + 2 e ⁻ under the anode catalysis; (3) at the other end of the cell, introduce oxygen (or air) to the cathode; in the meantime, the H reaches the cathode through the electrolyte and the electron reaches the cathodes through the external circuit; and then (4) under the actions of the cathode catalysis, introduce the air containing oxygen to the cathode to proceed with the cathode reactions of 1/2O₂+2H⁺+2e⁻ H₂O to produce water.

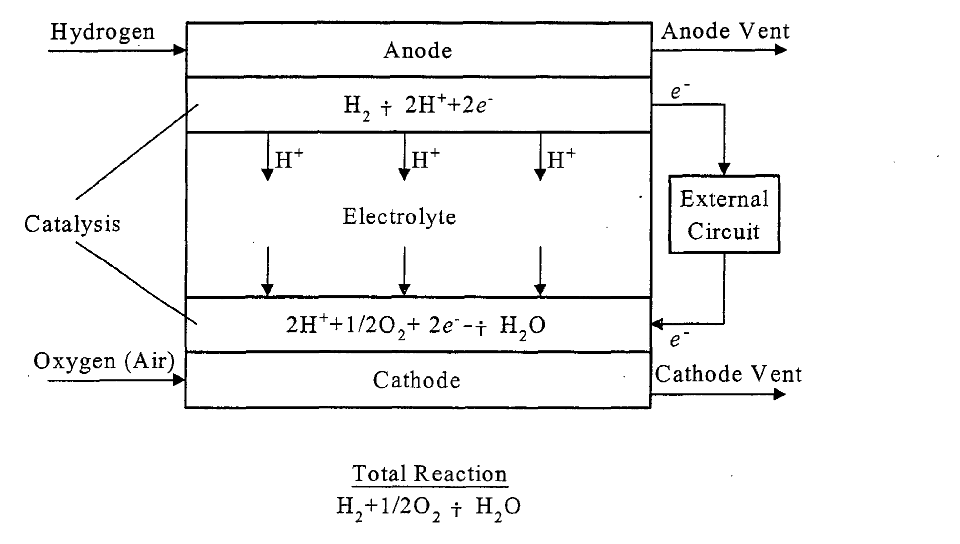

PEMFC utilizes a basic principle which employs a proton exchange membrane (PEM) to serve as an electrolyte providing the passage of proton but not providing the passage of electron, and supplies anode and cathode gas diffusions layers (GDLs). An anode catalysis and cathode catalysis are respectively coated between the PEM and GDLs to form a membrane electrode assembly (MEA) ready for proceeding with the above-mentioned anode and cathode reactions. At both sides of the MEA, an anode bipolar plate and a cathode bipolar plate are provided under an appropriate compression pressure to allow the hydrogen and oxygen to pass to proceed with the above-mentioned reactions. The above is the assembled construction and operation of a PEMFC.

The efficiency of the PEMFC depends on whether the above-mentioned anode and cathode reactions are effected completely or not. That is, the selections of the materials and isolations of pollutions between the layers will be the important factors of the efficiency of the PEMFC operations. Therefore, in additions to carefully selecting the materials utilized for each layer, to ensure that the anode proceeds uninterruptedly with an anode reactions and the cathode only receives the anode ions (i.e. the proton/ H ⁺) and electron to proceed uninterruptedly with the cathode reactions is the important issue in this field. Briefly, in a PEMFC, in order to precisely and definitely control H ⁺ to pass from the anode through the PEM to the cathode, and control the electron to pass from the anode through the external circuit to the cathode without any failure is able to ensure the stability of the operations efficiency of the PEMFC. Generally speaking, two reasons which may affect the above precise control are as follows: one is a failure to efficiently perform the leak and pollution proof functions between the anode and cathode bipolar plates, and the other is a failure to properly control the conductive compression pressure between each layer under an optimal status. This is the reason why the PEMFC cannot be mass-produced by modulizations scale to really be a substitute for the existing energy.

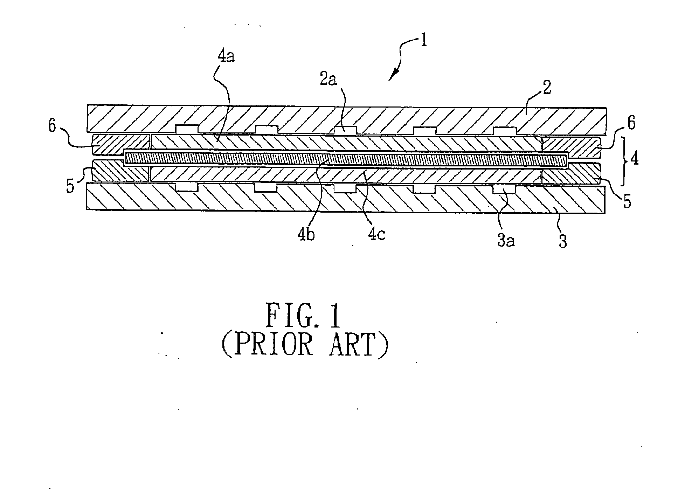

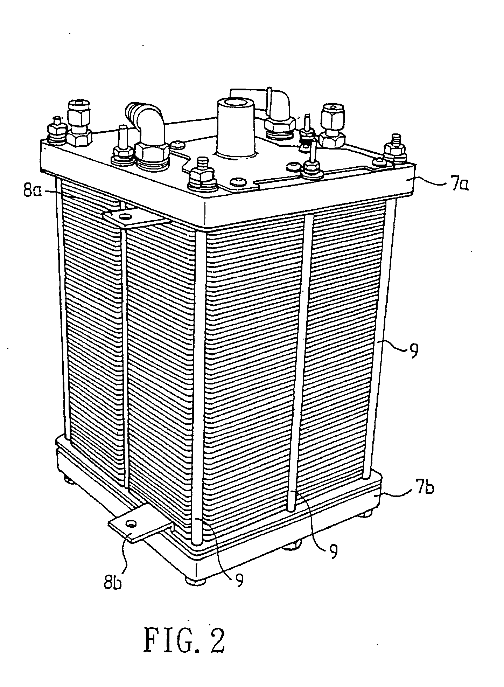

Fig. 1 is a schematic view showing the single cell 1 of a prior art PEMFC, which is constituted by an anode bipolar plate 2, a cathode bipolar plate 3 and a MEA 4. The cathode bipolar plate 3 is provided with a gasket 5 along an edge portions thereof, and the MEA 4 is disposed on a central portions of the cathode bipolar plate 3. Next, the anode bipolar plate 2 provided with a corresponding gasket 6 is superimposed over the MEA 4 to accomplish the manufacturing of the single cell. In a similar fashions, a plurality of such single cells are stacked to configure a PEMFC as shown in Fig. 2. After the connections of plural manifolds adapted to supply gas and coolant and the dispositions of an upper end plate 7a and a lower end plate 7b, together with the conductive terminal 8a, 8b, the complete fuel cell is able to perform the desired conductive reactions under a pre-determined compressions pressure by fastening a plurality of tie rods 9 therethrough.

However, this construction for the fuel cell will result in the following disadvantages:
(1) The hydrogen supplied from the channels 2a of the anode bipolar plate 2 and the hydrogen ions decomposed therefrom tend to leak out due to the gaps between the gaskets 5, 6 and the bipolar plates 2, 3 when they pass through the anode GDL 4a, PEM 4b and cathode GDL 4c of the MEA 4. The oxygen supplied from the channels 3a of the cathode bipolar plate 3 also tends to leak out due to such gaps. The leakage of hydrogen and oxygen significantly affects the electrochemical reactions. This disadvantageous phenomenon will be extremely obvious after a considerable duration of using the gaskets 5, 6, even though those gaskets are formed integrally into a single gasket.
(2) Due to the restrictions of the property of the materials employed for the gasket 5, 6, the compression pressure in the whole fuel cell becomes uneven because the places neighboring the gaskets 5, 6 have uneven pressure density and/or the gaskets 5, 6 have uneven ageing time. This is why the anode ions often fail to evenly implement their diffusion process, which is a severe block to the conductivity of a PEMFC. Furthermore, because the whole PEMFC should rely on the tie rods 9 disposed circumferentially to control its compression pressure, the pressure of the circumferential portion is significantly different from that of the central portion, which will adversely affect the operational effects of the fuel cell.
(3) Utilizing a gasket between the bipolar plates fails to efficiently isolate pollution and fails to properly control each layer in position. Further, because it is difficult to control in advance the compression pressure at an optimal range, it is not possible to pre-prepare a stock of the single cells in the modulized form to proceed with any of the possible types of tests for the purposes of cost reduction and mass production. This is really the key factor of the failure to widely and effectively apply PEMFCs in the industry nowadays.

Accordingly, to provide a highly efficient, mass-produced and cost-saving modulized single cell and unit to solve the above-mentioned problems and further supply breakthrough ideas in manufacturing the PEMFC is a common desire of people skilled in this field.

### Brief Summary of the Invention

The primary objective of this invention is to provide a single cell of a fuel cell, particularly a single cell of a PEMFC or a unit thereof assembled by a plurality of the single cells, by means of modulizing and unitizing the cell and unit, to simplify the manufacturing process of a PEMFC. Because it is possible to test the efficiency of each cell or unit in advance according to this invention, the quality of the whole fuel cell is significantly improved and the manufacturing cost thereof is reduced to a mass production scale, thereby practically replacing the existing energy.

Another objective of this invention is to provide a single cell of a fuel cell, particularly a single cell of a PEMFC or a unit comprising a plurality of the single cells. By means of robotically dispensing a desired amount of silicon rubber (RTV) between the circumferential portion of the anode bipolar plate and that of the cathode bipolar plate, the two bipolar plates and the MEA sandwiched therebetween can be well positioned in a cushioned manner and can be controlled under a pre-determined compression pressure in advance before the RTV is cured, thereby ensuring that a high quality single cell and unit is obtained.

Yet a further object of this invention is to provide a single cell of a fuel cell, particularly a single cell of a PEMFC or a unit comprising a plurality of the single cells. By means of dispensing RTV between bipolar plates, the leakage of the gas and liquid guided through the channels formed on the bipolar plates can therefore be avoided, thereby completing the gas reaction in the fuel cell operation.

The detailed technology and preferred embodiments implemented for the subject invention are described in the following paragraphs accompanying the appended drawings for people skilled in this field to well appreciate the features of the claimed invention.

### Brief Descriptions of the Several Views of the Drawings

Fig. 1 is a schematic view showing the cross section of the assembly of a single cell of a prior art fuel cell;
Fig. 2 is a perspective view of an assembled fuel cell;
Fig. 3 is a schematic view showing the cross section of the modulized single cell of a fuel cell according to the present invention;
Fig. 4 is a schematic view showing the cross section of the first embodiment of the modulized single cell unit of the fuel cell according to the present invention;
Fig. 5 is a schematic view showing the cross section of the second embodiment of the modulized single cell unit of the fuel cell according to the present invention; and
Fig. 6 is a schematic view showing the cross section of the third embodiment of the modulized single cell unit of the fuel cell according to the present invention.

### Detailed Descriptions of the Invention

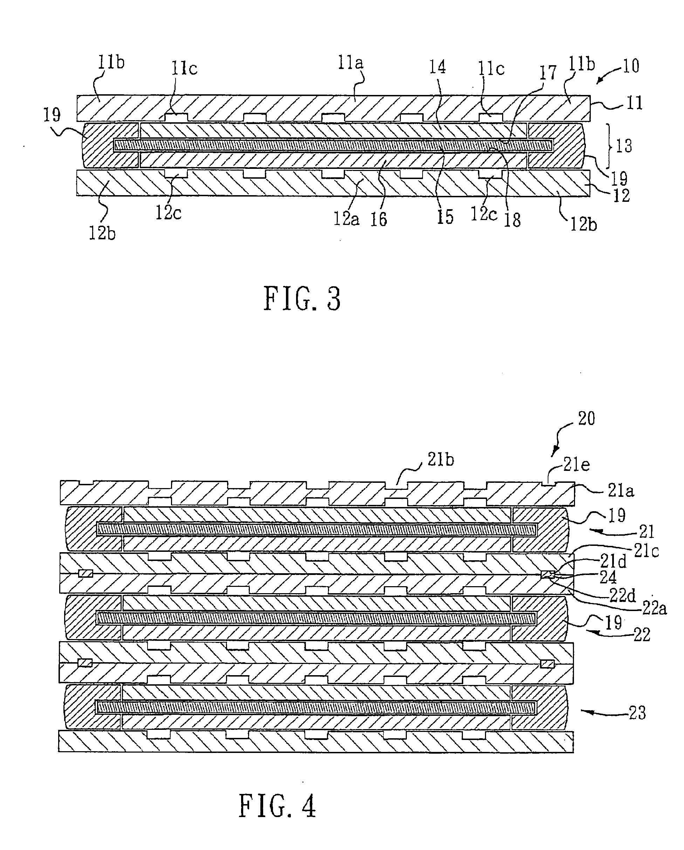

Fig. 3 shows the modulized single cell 10 of a Proton Exchange Membrane Fuel Cell (PEMFC) according to the present invention. Of course, the technical concept cannot be restricted to a PEMFC. The modulization technology of the subject invention is applicable to any type of fuel cell having similar construction.

The modulized single cell 10 includes an anode bipolar plate 11 and a cathode bipolar plate 12. Each bipolar plate has a central portion 11a, 12a and a circumferential portion 11b, 12b. The central portions 11a, 12a are formed with a plurality of channels 11c, 12c, respectively, having pre-determined layouts for hydrogen (at the anode) and oxygen (at the cathode) flowing therethrough. A membrane electrode assembly (MEA) 13 has an anode gas diffusion layer (GDL) 14, a proton exchange membrane (PEM) 15 and a cathode gas diffusion layer (GDL) 16 that are sequentially stacked between central portions 11a of the anode bipolar plate 11 and the central portion 12a of the cathode bipolar plate 12. An anode catalytic layer 17 is coated between the anode GDL 14 and the PEM 15, and a cathode catalytic layer 18 is coated between the PEM 15 and the cathode GDL 16, such that the hydrogen introduced through the channels 11c of the anode bipolar plate 11 and the oxygen introduced through the channels 12c of the cathode bipolar plate 12 are adapted to proceed with the reverse reaction of the electrolytic dissociation of water. The anode catalytic layer 17 and cathode catalytic layer 18 can be in advance applied to the opposing sides of the PEM 15, respectively. Alternatively, those layers 17, 18 can be applied to the sides of the GDLs 14, 16 facing the PEM 15 first before stacking each layer to form the MEA 13.

The present invention is characterized in that the circumferential portion 11b of the anode bipolar plate 11 and the circumferential portion 12b of the cathode bipolar plate 12 is provided with silicon rubber (RTV) 19, that is coated along that area which is free from the manifolds for passing fluid and other passages which should be kept unblocked. When the applied RTV is cured, the anode bipolar plate 11 and the cathode bipolar plate 12 can fix themselves with the MEA 13 sandwiched therebetween in position in a cushioned manner under a pre-determined optimal compression pressure, so as to form a unitary single cell module 10. Preferably, the RTV 19 as employed is selected from material which has non-corrosive electronic grade and can be cured under moisture or heat.

In experimental and practical experience, in the event that the RTV 19 utilized for the single cell of a PEMFC is made of heat-cured material and substantially has a heat-cured temperature of 100-140 , which is higher than the working temperature of less than 100 for a PEMFC, an optimal after-cured effect thereof can be obtained. In addition, the viscosity of the RTV 19 as utilized is greater than 150,000 centi-poise to get an optimal sealing and positioning effect. Furthermore, if the RTV 19 has a dielectric strength ranging from 15-20 V/mil, it will sufficiently perform a considerable electricity resistance. Nevertheless, the above-mentioned values are proposed for people skilled in this field to implement the present invention under a preferred situation. It dos not mean that any values going beyond the proposed range cannot perform well the expected functions as set forth therein.

As a matter of fact, as shown in Fig. 3, the circumferential portion 11b of the anode bipolar plate 11 and the circumferential portion 12b of the cathode bipolar plate 12 in the single cell 10 are provided with pre-configured manifolds (not shown) for passing gas and liquid. In manufacturing the single cell 10, the first step is to dispose MEA 13 on the central portion 12a (or 11a) of the cathode (or anode) bipolar plate 12 (or 11), then utilizing the programmed robotic arm to dispense the desired amount of the RTV, free from the manifolds, on the circumferential portion 12b (11b) of the cathode (or anode) bipolar plate 12 (or 11), and finally superimpose the anode (or cathode) bipolar plate 11 (or 12) over the MEA 13 which has been provided on the cathode (or anode) bipolar plate 12 (or 11), under a pre-determined compression pressure of about 100psi for performing a preferred effect of conductivity. After the anode bipolar plate 11 and the cathode bipolar plate 12 are evenly pressed together and the viscose RTV flows into the gaps probably existing between the layers to achieve a secure seal, the RTV can be cured under an application of moisture or heat. Meanwhile, the layers of the single cell 10 can be in contact with one another at a fixed compression pressure and the circumferential portions thereof accomplish an excellent isolation effect.

For the purpose of mass production, one can assemble a plurality of single cells as mentioned above by superimposing them onto another to form a cell unit module for performing a better production efficiency and high power output.

Fig. 4 shows the cross sectional view of a first embodiment of superimposing a plurality of (by way of example, three layers of) single cells as shown in Fig. 3. The superimposition of the single cells refers to the series connection of common batteries; whereas the reaction of the MEA in each single cell refers to the electrochemical reaction of the interior between the positive and negative terminals of a common battery. Under the construction, the more single cells which are stacked in a series, the higher voltage output can be attained and the more heat waste will be exhausted. Accordingly, in the event that a considerable number of single cells are stacked onto one another, and they reach such an extent that the heat waste as exhausted is such as cannot be ignored, the anode bipolar plate 21a at the uppermost single cell 21 (or the cathode bipolar plate of the lowermost single cell 23) of the cell unit 20, after stacking, should be additionally formed with a plurality of coolant channels 21 b for coolant to flow therethrough to cool down the heat waste in a cycling manner. In addition, a groove 21e is formed on a top of the circumferential portion to receive the injected RTV to position a further similar modulized cell unit and to avoid coolant leakage.

As for the procedure of modulizing and stacking the single cells 21, 22, 23, a measure to apply the RTV as shown in Fig. 3 can also be employed. That is, the cathode bipolar plate 21c of the single cell 21 and the anode bipolar plate 22a of the single cell 22 are provided with two opposing grooves 21d, 22d formed on the circumferential portion of a lower surface and an upper surface thereof, respectively. Before the stacking of the single cells in series, a suitable amount of RTV is similarly injected to the groove 22d by means of programed robotic arms. After that, the single cell 21 is superimposed over another single cell 22 under a pre-determined compression pressure for the next curing procedure (the single cells 22 and 23 are stacked together in a similar fashion). Preferably, the RTV 24 employed in the interior of each single cell and that 19 employed between every two single cells are of similar or the same material. Accordingly, the laminate compression pressure between the layers of each single cell and between cells of the unit can readily get to be equal. Regardless if the RTV 19 and 24 are cured sequentially or concurrently, the compression pressure can still be readily controlled to a desired equal value so as to achieve an optimal and stable electrical conductivity effect.

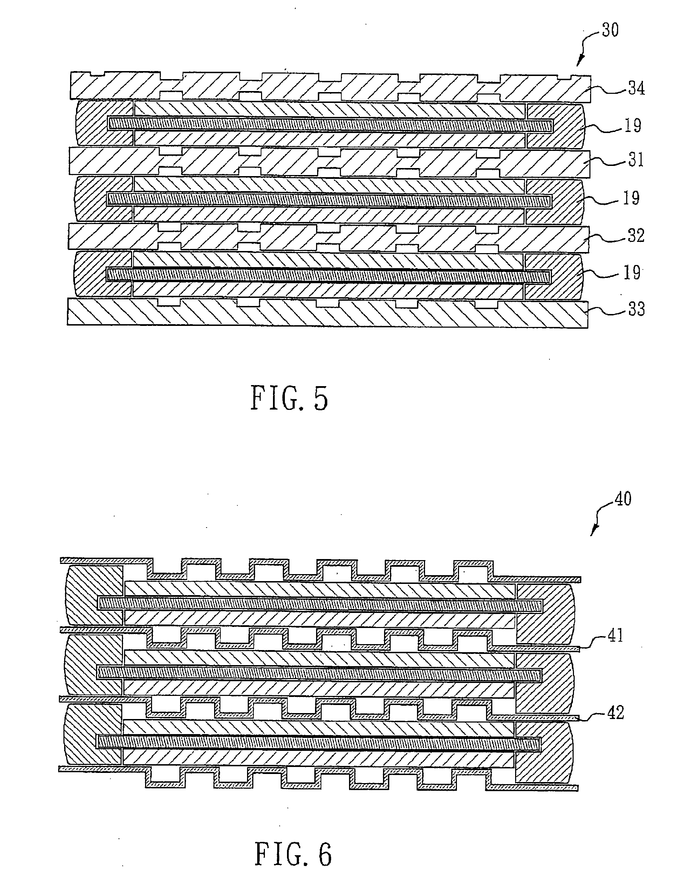

Since the stacking of the single cells utilizes the technology of the cathode bipolar plate in complete contact, in series, with the adjacent anode bipolar plate, the measure to form the cell unit 30 can also refer to the second embodiment as shown in Fig. 5 that integrally combines the anode and cathode bipolar plates to a single piece, namely, a common bipolar plate 31, 32 first and locates the MEA 13 among the cathode bipolar plate 33, common bipolar plate 32, 31, and coolant bipolar plate 34 in a sequential order. Following the measure as introduced with reference to Fig. 3, the RTV is injected to a suitable position and cured at a pre-determined condition, thereby forming a modulized cell unit 30 having an even and equal laminate compression pressure.

Because bipolar plates are disposed in the single cells for providing the passages for hydrogen, oxygen and coolant, their shapes can be configured to any type as long as they can properly perform the functions of conducting electricity and isolating the fluid passages of a single cell from those of an adjacent single cell.

Fig. 6 shows a third embodiment of the cell unit 40 which employs integrally-formed common bipolar plates 41, 42 and is configured to a corrugated shape made of metallic sheets, so as to save costs of material and reduce weights of the whole fuel cell, thereby enhancing the competitive ability in this field.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A modulized single cell of a proton exchange membrane fuel cell (PEMFC), comprising:
an anode bipolar plate and a cathode bipolar plate, each having a central portion and a circumferential portion;
a membrane electrode assembly (MEA), including:
an anode gas diffusion layer (anode GDL), a proton exchange membrane (PEM) and a cathode gas diffusion layer (cathode GDL) sequentially sandwiched at the central portion between the anode bipolar plate and the cathode bipolar plate;
an anode catalytic layer, provided between the anode GDL and the PEM;
a cathode catalytic layer, provided between the PEM and the cathode GDL;
silicon rubber (RTV) is applied between the circumferential of the anode bipolar plate and the circumferential portion of the cathode bipolar plate in a desired configuration to seal and position the anode bipolar plate to the cathode bipolar plate under a pre-determined compression pressure after the RTV is cured, whereby forming the integral modulized single cell.

2. The modulized single cell of Claim 1, wherein the applied RTV is made of silicon rubber material of non-corrosive electronic grade.

3. The modulized single cell of Claim 2, wherein the applied RTV has a heat cured temperature of substantially 100 -140 .

4. The modulized single cell of Claim 3, wherein the applied RTV has a viscosity substantially greater than 150,000 centi-poise.

5. The modulized single cell of Claim 4, wherein the applied RTV has a dielectric strength of substantially 15 V/mil - 20 V/mil.

6. The modulized single cell of Claim 5, wherein the anode bipolar plate and the cathode bipolar plate are in contact with each other under the compression pressure of substantially 100 psi.

7. A modulized cell unit of a proton exchange membrane fuel cell (PEMFC), comprising a plurality of modulized single cells as claimed in Claim 1, in which the plurality of modulized single cells are superimposed over one another in a sequential order, wherein:
the anode bipolar plate of each of the modulized single cells has an upper surface, and the cathode bipolar plate of the modulized single cells has a lower surface, of which at least one of the upper surface and the lower surface is formed with a groove along the circumferential portion thereof, and the RTV is further applied into the groove to seal and position the sequentially ordered single cells under the pre-determined compression pressure after the RTV is cured, whereby forming the integral modulized cell unit.

8. The modulized cell unit of Claim 7, wherein the applied RTV is made of silicon rubber material of non-corrosive electronic grade.

9. The modulized cell unit of Claim 8, wherein the applied RTV has a heat cured temperature of substantially 100 -140 .

10. The modulized cell unit of Claim 9, wherein the applied RTV has a viscosity substantially greater than 150,000 centi-poise.

11. The modulized cell unit of Claim 10, wherein the applied RTV has a dielectric strength of substantially 15 V/mil - 20 V/mil.

12. The modulized single cell of Claim 11, wherein the anode bipolar plate and the cathode bipolar plate are in contact with each other and the single cells are in contact with one another under the compression pressure of substantially 100 psi.

13. A modulized cell unit of a proton exchange membrane fuel cell (PEMFC), comprising a plurality of modulized single cells as claimed in Claim 1, in which the plurality of modulized single cells are superimposed over one another in a sequential order, wherein:
the anode bipolar plate of each of the modulized single cell is integrally formed with the cathode bipolar plate adjacent to the anode bipolar plate.

14. The modulized cell unit of Claim 13, wherein the applied RTV is made of silicon rubber material of non-corrosive electronic grade.

15. The modulized cell unit of Claim 14, wherein the applied RTV has a heat cured temperature of substantially 100 -140 .

16. The modulized cell unit of Claim 15, wherein the applied RTV has a viscosity substantially greater than 150,000 centi-poise.

17. The modulized cell unit of Claim 16, wherein the applied RTV has a dielectric strength of substantially 15 V/mil - 20 V/mil.

18. The modulized single cell of Claim 17, wherein the integrally formed anode and cathode bipolar plates are in contact with each other under the compression pressure of substantially 100 psi.
